# EUROPEAN PATENT APPLICATION

(11) **EP 0 645 644 A1**
(43) Date of publication of application: **29.03.1995**
(21) Application number: 94305859.4
(22) Date of filing: 08.08.1994
(51) Int. Cl.: G01S 17/02

(54) **Intrusion detector**

(30) Priority: 08.08.1993 IL 10661793
(71) Applicant: STATE OF ISRAEL - MINISTRY OF DEFENCE, Haifa 31021 (IL)
(72) Inventor: Yahav, Giora, Haifa 34814 (IL)
(74) Representative: Price, Paul Anthony King

(57) **Abstract**

A security device for protecting a protected area (110) comprises two laser reflectometer detectors (100). Each detector (100) produces an area swept laser beam (102) aligned to sweep an area outside the protected area and has a time-of-flight detector for detecting reflections by objects in the path of the laser beam outside the protected area.

## Description

The present invention relates to intruder detection systems, and more specifically to laser based intruder detection systems.

Intrusion detection systems using radiation emitters and receivers are well known in the art.

One method comprises projecting a beam of infrared radiation toward a field of view over a protected area and receiving back a reflection of the projected beam. Any changes in the strength or phase of the reflected beam, or distance traveled by the projected and received beam, indicates the possibility of an intruder. An example of such a system is described in U.S. Patent 4,949,074.

Another method is to use a series of laser beams to define a perimeter. Any invasion of the perimeter is sensed by interruption of the beams. An example of such a system is described in U.S. Patent 3,825,916 wherein a continuous chain of laser beams is constructed from two line-of-sight beams displaced horizontally and vertically from each other. To construct the chain, a number of transmitting and receiving stations, and possibly corner reflectors are required.

Two problems arise, particularly when protecting "open", outdoor areas such as a soldier's sleeping quarters. First, as a laser beam is normally a narrow, sharply defined beam, there is the problem of preventing an intruder from simply crawling over or under a single laser beam used to mark the perimeter. Secondly, if a plurality of beams are used to define the perimeter, there is the problem of producing the plurality of beams using the fewest components, to make set-up of the system simple.

Additionally, an alarm system as described above would not be effective in protecting a military zone such as a soldier's sleeping quarters. This is because an alarm system as described above only triggers an alarm when an intruder actually enters the protected zone. In military situations, what is needed is a protected zone, where intrusion in the vicinity of the protected zone triggers an alarm.

### SUMMARY OF THE INVENTION

It is an object of the present invention to provide a perimeter security device capable of protecting a zone by alerting about intrusions in the vicinity of the zone. The invention accomplishes the objective using a relatively minimum amount of components.

The invention employs two laser detectors, each comprising a laser beam source operative to sweep the required dangerous space around a, preferably quadrilateral shaped, protected zone. Each detector also includes a time-of-flight detector for detecting reflections caused by objects in the path of the laser beam. The detectors are preferably placed at substantially opposite corners of a quadrilateral shaped zone, and, with two detectors employed, substantially sweep the entire space around the protected zone without sweeping the inside of the zone.

In a preferred embodiment of the present invention, the laser beam source sweeps the space around the protected zone through means of a rotating reflector. The reflector directs a laser beam generated by a laser beam source into the space around the protected zone, and also directs a reflected beam caused by an object to a receiver. In a preferred embodiment of the invention, the reflector directs both the generated laser beam and its reflection along substantially the same path.

In a preferred embodiment of the present invention, a beam splitter, such as a half-silvered mirror, is employed to allow a laser beam from the laser source to pass through to the reflector, while diverting any reflected beams to the receiver.

In a preferred embodiment of the present invention, the reflector is capable of producing both vertical and rotational sweeping of the beam, so that a single laser beam can effectively cover a wide space. In a preferred embodiment of the present invention, the reflector comprises two mirrors: a first mirror for sweeping the beam vertically, and a second mirror for sweeping the beam horizontally. The detector device is placed at a corner of the quadrilateral so that an angular area (having as it origin a corner position of the quadrilateral) outside the zone is swept. With two reflectors, as each reflector is placed at opposite corners of the quadrilateral shaped protected zone, laser beams are swept over substantially the entire space outside the protected zone, but without sweeping the space inside the zone.

In a preferred embodiment of the present invention, a computer or similar control device is operative to control the sweep area of the reflectors and the movement of the mirrors. Additionally, as one of the mirrors may rotate continuously in a preferred embodiment of the present invention, the computer is used to fire the laser only when the sweep is outside the zone.

The computer is also used to teach the alarm system not to respond to fixed objects such as trees. This allows the system to cover an area which may include isolated fixed objects. Moreover, data processing means are preferably provided to distinguish mansized objects from non-threatening objects such as birds.

Thus, to protect a square area in accordance with a preferred embodiment of the present invention, the mirror responsible for sweeping the laser beam over an angle along the perimeter is set to rotate over an angle much greater than 90° and up to 360°. The mirror which directs the beam vertically is set rotate the mirror over an angle corresponding to the vertical height that is required to be covered.

### BRIEF DESCRIPTION OF THE DRAWINGS

The following invention will be understood and appreciated more fully from the following detailed description, taken in conjunction with the drawings in which:
Fig. 1 is an illustration depicting a quadrilateral shaped protected zone and an area swept by laser beams;
Fig. 2 an illustration of the optical components of a detector in accordance with a preferred embodiment of the present invention; and
Fig. 3 is an illustration of the system in operation, with detectors connected to a power system and control apparatus.

### DETAILED DESCRIPTION OF PREFERRED EMBODIMENTS

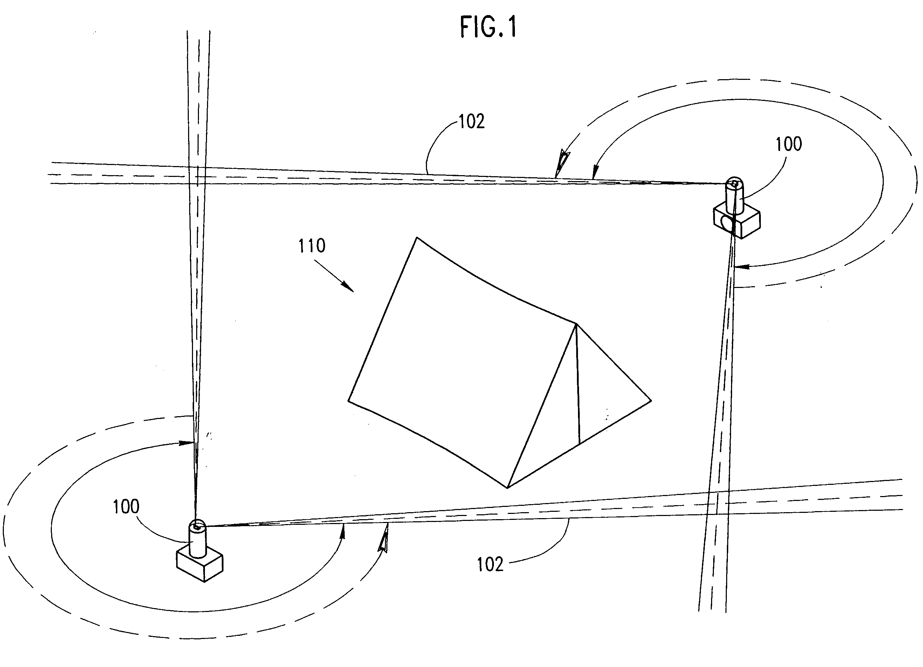

Fig. 1 shows two detectors 100, placed at opposite corners of a quadrilateral shaped zone 110. A laser beam 102 is projected from each detector 100, and sweeps an area outside zone 110 as shown in Fig. 1. Quadrilateral shaped zone 110 is "created" from the area that the two detectors do not sweep. In this area, personnel may freely move without triggering an alarm.

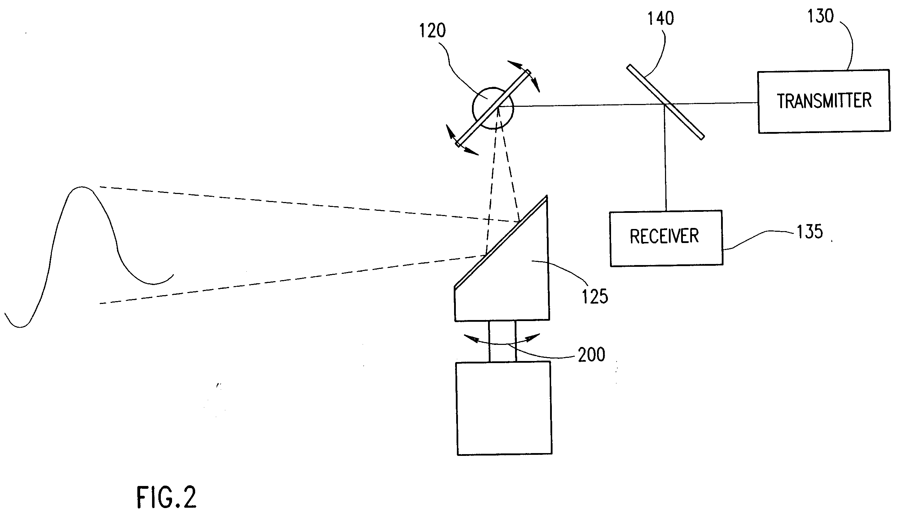

Fig. 2 shows detector 100 in more detail. A transmitter 130 generates a laser beam. The laser beam is directed toward a movable vertical guiding mirror 120, which directs the beam toward a second angular guiding mirror 125, which projects the beam out of the detector. Angular guiding mirror 125 is constructed so that it may rotate about a vertical axis. When angular guiding mirror 125 is placed at a corner of quadrilateral zone 110, it is possible to sweep a wide angle (that is, much greater than 90° and up to 360°) outside zone 110.

A beam splitter, such as a half-silvered mirror 140, allows the laser beam to pass through to vertical alignment mirror 120, while directing reflected beams to a receiver 135.

In a preferred embodiment of the invention, transmitter 130, receiver 135, half-silvered mirror 140 and both mirrors 120 and 125 are preferably housed in the same housing. Preferably also, vertical guiding mirror 120 is placed close to angular guiding mirror 125 so that only small changes in angle are required by mirror 120 to effect a large vertical displacement in the projected laser beam. Vertical guiding mirror 120 projects the beam vertically so that only one beam is required to cover a wide space.

It should also be noted that in an alternative embodiment of the present invention, only one mirror (mirror 125) capable of both rotational motion as shown by arrows 200 in Fig. 2, and a nodding motion to give a vertical sweep, is required to sweep the laser beam.

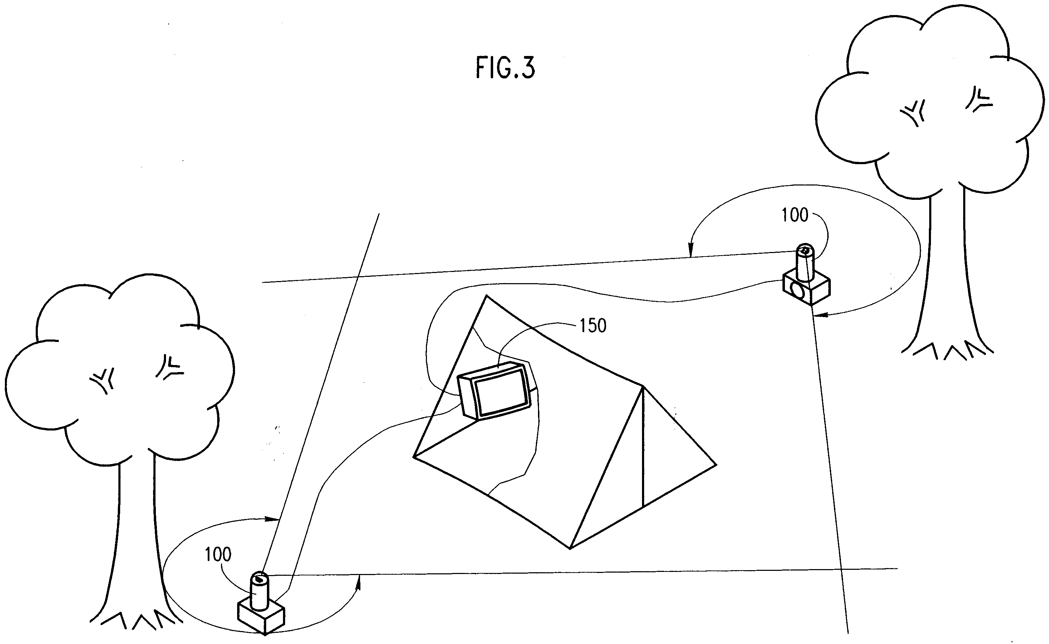

Referring to Fig. 3, detectors 100 are connected to a power and control device 150. Control device 150 controls the axial movement of mirrors 120 and 125, and preferably sets mirrors 120 and 125 to sequentially sweep the space outside zone 110. Also, an operator programs control device 150 with parameters defining the sweep area. Additionally, in a preferred embodiment of the present invention, angular guiding mirror 125 may rotate continuously, so control device 150 is used to fire the laser only when the sweep is outside the zone.

Control device 150 also contains time-of-flight circuitry for detecting the presence of an intruder. As well known in the art, reflections of a projected laser beam indicate the presence of an intruder. In addition, the time a laser beam travels to and from a target can be computed to yield a distance to the target.

Control device 150 preferably has a set-up mode where fixed background objects such as trees are noted and stored for reference. In an alert mode, any changes in the background signify a potential intruder. This allows the system to cover an area which may include isolated fixed objects. Moreover, data processing means contained in control device 150 are preferably provided to distinguish man-sized objects from non-threatening background objects such as birds or small mammals.

Additionally, display means are preferably contained in control device 150 so that a map of the area, including fixed and moving objects, is displayed to an operator.

Thus, the present invention provides comprehensive intrusion detection in the vicinity of a protected zone and accomplishes the task using only a minimum number of components. The system is particularly adept for protecting soldiers' quarters in the field, since it is easy to set up and use. Moreover, all the components are preferably portable and, by having a battery for operation, self-contained.

It will be appreciated by persons skilled in the art that the present invention is not limited by the embodiments shown and described herein.

## Claims

1. A security device for protecting a protected area, comprising:
first and second laser reflectometer detectors, each comprising:
an area swept laser beam aligned to sweep an area outside the protected area; and
a time-of-flight detector for detecting reflections by objects in the path of the laser beam outside the protected area.

2. A perimeter security device according to claim 1 having said detectors placed at opposite corners of a quadrilateral shaped zone comprising the protected area, wherein the two detectors are operative to detect reflections by objects in an area surrounding the entire perimeter of the zone.

3. A perimeter security device according to claim 1 or 2, wherein each detector further comprises:
rotational projection means for sweeping said laser beam through a horizontal angular displacement so that objects over a wide horizontal area may be detected.

4. A perimeter security device according to any one of claims 1 to 3, wherein each detector further comprises:
vertical projection means for moving said laser beam up and down during a sweep so that objects at various heights may be detected.

5. A perimeter security device according to any one of claims 1 to 4, wherein said laser beam is swept vertically and rotationally to cover the space outside of the perimeter of said area without sweeping the space inside the protected area.

6. A perimeter security device according to any preceding claim, further comprising:
a computer for:
controlling the sweep of said laser beam;
calculating a distance to a target; and
distinguishing fixed background objects from threatening objects.

7. A perimeter security device according to claim 6, wherein said computer is further used for distinguishing man-sized objects from non-threatening moving background objects.

8. A perimeter device according to claim 6 or 7, further comprising:
display means for displaying an image of the swept area so that fixed background and moving objects may be seen and distinguished by a person.

9. A portable perimeter security device according to any one of the preceding claims wherein system components are easily portable by a person and also having a portable battery for a power source.
